Europäisches Patentamt

European Patent Office

Office européen des brevets

(19)

(11) Veröffentlichungsnummer: **0 244 004 B1**

(12) **EUROPÄISCHE PATENTSCHRIFT**

(45) Veröffentlichungstag der Patentschrift: 03.07.91

(51) Int. Cl.⁵: **C03B 37/14**

(21) Anmeldenummer: 87200655.6

(22) Anmeldetag: 07.04.87

(54) **Vorrichtung zur paarweisen Kopplung der Enden zweier Gruppen von faserförmigen Lichtwellenleitern.**

(30) Priorität: 19.04.86 DE 3613345

(43) Veröffentlichungstag der Anmeldung:
04.11.87 Patentblatt 87/45

(45) Bekanntmachung des Hinweises auf die
Patenterteilung:
03.07.91 Patentblatt 91/27

(84) Benannte Vertragsstaaten:
**DE FR GB IT SE**

(56) Entgegenhaltungen:
DE-A- 3 105 156
DE-B- 2 633 572
DE-B- 2 932 723
FR-A- 2 521 734

JOURNAL OF LIGHTWAVE TECHNOLOGY,
Band LT-2, nr 1,1984, S.25-31; M Tachikura et
al : "Fusion Mass-Splices for Optical Fibers
Using High-Frequency Discharge"

(73) Patentinhaber: **Philips Patentverwaltung
GmbH**
**Wendenstrasse 35 Postfach 10 51 49**
**W-2000 Hamburg 1(DE)DE**

Patentinhaber: **N.V. Philips' Gloeilampenfabrieken**
**Groenewoudseweg 1**
**NL-5621 BA Eindhoven(NL)FR GB IT SE**

(72) Erfinder: **Oppenländer, Theodor**
**Graf-Adolf-Strasse 77**
**W-5000 Köln 80(DE)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

**Beschreibung**

Die Erfindung bezieht sich auf eine Vorrichtung zur paarweisen Kopplung der Enden zweier Gruppen von faserförmigen Lichtwellenleitern (LWL), welche auf je einem im wesentlichen in Längsrichtung der Lichtwellenleiter verfahrbaren Schlitten mittels Klemmvorrichtungen gehalten sind, so daß die Stirnflächen der Enden einer Gruppe von LWL jeweils gegen die Stirnflächen der Enden der anderen Gruppe der LWL verschiebbar sind, mit einem zwischen den Schlitten angeordneten Ausrichtblock, welcher für die Ausrichtung der einzelnen LWL Führungsrinnen aufweist, in welche die in zugeordnete Auffächerungskämme eingefädelten Enden der LWL einsortiert und durch Andruckkräfte ausübende Andrückelemente gehalten sind.

Derartige Vorrichtungen, wie sie in Journal of Lightwave Technology, Vol. Lt.-2, No. I, l984, Seite 28, beschrieben sind, werden benötigt, um zu verschweißende Paare von LWL zueinander auszurichten. Sie sind jedoch auch dazu geeignet, die LWL zur dämpfungsarmen lichtleitenden Verbindung lose miteinander zu koppeln, um z.B. Meßvorgänge durchführen zu können.

Im bekannten Fall sind für jede Gruppe der LWL sowohl weich andrückende Andrückelemente jeweils vor der Verbindungsstelle auf dem Ausrichtblock und hart andrückende jeweils auf dem Schlitten angeordnet. Die weich andrückenden sollen ein seitliches Herausrutschen der Fasern aus den Führungsrinnen verhindern und dennoch eine axiale Verschiebung in Richtung der Führungsrinne zulassen.

Auf den Führungsrinnen der Schlitten werden die Fasern dagegen auch in Längsrichtung unverschiebbar festgehalten.

Der Erfindung liegt die Aufgabe zugrunde, die bekannte Vorrichtung hinsichtlich der Positioniergenauigkeit zu verbessern.

Die Lösung gelingt dadurch, daß für jede Gruppe von LWL ein Andrückelement vorgesehen ist, welches über ein Auflageelement eine Gewichtskraft auf die LWL ausübt, und daß am Andrückelement ein Magnetanker angeordnet ist, welcher sich im Einflußbereich eines im wesentlichen entgegen der Schwerkraftrichtung zum Magnetanker des aufliegenden Andrückelements hin verschiebbaren Dauermagneten befindet, mit welchem die Auflagekraft verstärkbar ist.

Da erfindungsgemäß von je einem einzigen Andrückelement sowohl eine lockere als auch eine feste Andruckkraft erzeugt wird, kann die Gesamtlänge der Führungsrinne klein gehalten werden. Darüberhinaus werden die Enden der LWL nach der Ausrichtung in unmittelbarer Nähe der Stoßstelle fest angedrückt, so daß die relative Ausrichtlage der einzelnen Fasern zueinander besser gesichert ist. Als besonders vorteilhaft hat sich erwiesen, daß die festen Andrückkräfte bei der Verschiebung der Dauermagnete sanft auf die Fasern einwirken, so daß nicht mehr die Gefahr besteht, daß beim Auflegen hart andrückender Elemente Faserbrüche entstehen.

Ferner bieten Dauermagnete die Möglichkeit, mit einfachen konstruktiven Mitteln durch Einstellung des Luftspalts zwischen den Dauermagneten und den zugehörigen Ankern die Größe der Andruckkraft genau zu dosieren.

Es ist aus der FR-A-2 521 734 bekannt bei der Kopplung der Enden von zwei faserförmigen Lichtwellenleitern diese Enden mittels zwei Magnete auf dem Ausrichtblock festzuhalten.

Damit die Andruckkraft auf alle LWL einer Gruppe möglichst gleichmäßig verteilt wird, ist gemäß einer vorteilhaften Weiterbildung der Erfindung vorgesehen, daß das Auflageelement gelenkig an einem Schwenkhebel gelagert ist.

Die Einfädelung der einzelnen LWL einer Gruppe über den Auffächerungskamm in die Führungsrinnen wird dadurch erleichtert, daß die Auffächerungskämme den Führungsrinnen zugeordnete Bestandteile des Ausrichtblocks und unmittelbar vor den Führungsrinnen angeordnet sind.

Damit die Enden der LWL einer bereits eingefädelten Gruppe beim Einfädeln der LWL der anderen Gruppe nicht mit diesen versehentlich in Berührung kommen können, wodurch Beschädigungen insbesondere der Verbindungsstirnflächen der LWL möglich wären, ist als besonders vorteilhafte Weiterbildung der Erfindung vorgesehen, daß zwischen einem der Auffächerungskämme und der Verbindungsstelle der Gruppen der LWL oberhalb der Führungsrinnen ein aus dem Bereich der LWL entfernbares Hochhalteelement angeordnet ist.

Die Erfindung wird anhand der Beschreibung eines in der Zeichnung dargestellten bevorzugten Ausführungsbeispiels näher erläutert.

Figur I      zeigt eine Längsansicht einer erfindungsgemäß gestalteten Vorrichtung zur losen paarweisen Kopplung der einzelnen LWL zweier optischer Bandkabel

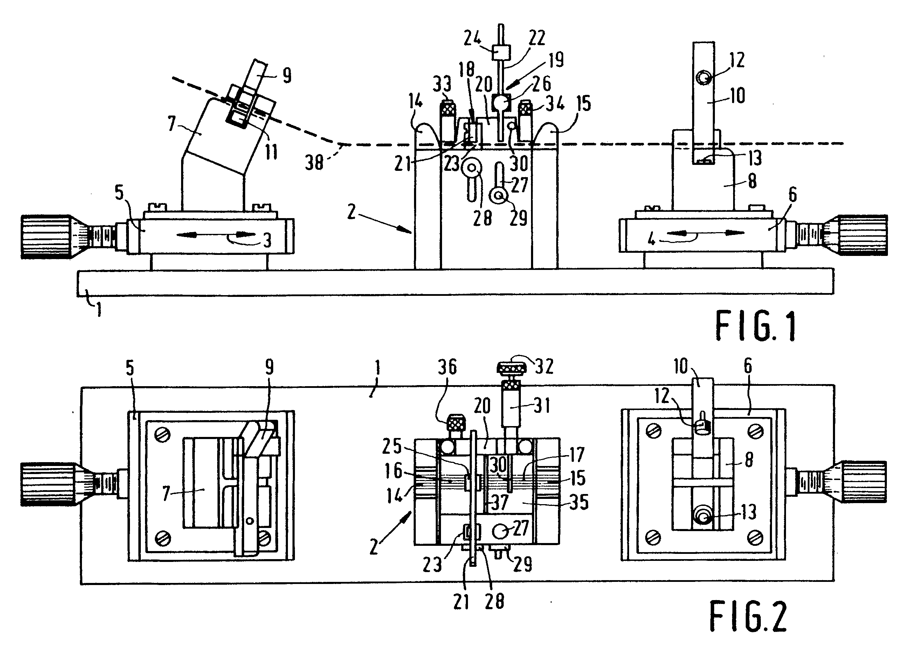

Figur 2      zeigt die Aufsicht auf die Vorrichtung nach Figur 2.

Die in den Figuren I und 2 dargestellte Vorrichtung dient insbesondere dazu, die einzelnen LWL zweier optischer Bandkabel miteinander zu koppeln, um einen möglichst dämpfungsarmen optischen Durchgang zu erreichen. Ein optisches Bandkabel enthält eine Mehrzahl von LWL, die in einer flachen Ebene mit gleichem Abstand zueinander fest miteinander verbunden sind. Damit Verbindungen der einzelnen LWL eines Bandkabels mit den einzelnen LWL eines anderen Bandkabels hergestellt werden können, müssen die einzelnen LWL zunächst auf einer gewissen Länge voneinander gelöst und damit separiert werden. Ferner müssen die LWL von ihrer Schutzummantelung befreit werden. Derart vorbehandelte Gruppen von LWL zweier Bandkabel werden dann mittels der in den Figuren dargestellten Vorrichtung zueinander ausgerichtet und mit den Stirnflächen paarweise aufeinander geführt.

Auf einer Grundplatte I ist ein Ausrichtblock 2 befestigt. Beidseitig davon sind in Richtung der Doppelpfeile 3 bzw. 4 verfahrbare Schlitten 5 und 6 angeordnet, mit welchen Halteblöcke 7 bzw. 8 bewegt werden, auf welchen die zu verbindenden Endabschnitte zweier Bandkabel mittels der Klemmhebel 9 und I0 fixierbar sind. An den Klemmhebeln 9 und I0 sind justierbare ferromagnetische Anker II und I2 befestigt, die von im rechten Teil der Figur 2 erkennbaren Magneten I3 angezogen werden.

Auf dem Ausrichtblock 2 sind Auffächerungskämme I4 und I5 angeordnet, welche eine der Anzahl der LWL des Bandkabels entsprechende Mehrzahl von tiefen Schlitzen aufweisen, in welche die LWL im gewünschten Abstand zueinander einfädelbar sind. Die in Figur I erkennbare abgerundete und schräge Kontur der Kämme I4 und I5 erleichtert das Einfädeln der LWL.

Unmittelbar anschließend an die Schlitze der Kämme I4 und I5 folgen zu diesen ausgerichtete, vorzugsweise dreieckförmige und parallel verlaufende Führungsrinnen I6 und I7.

Die beiden zu verbindenden Gruppen von LWL sind durch Andrückelemente I8 und I9 in den Führungsrinnen I6 bzw. I7 des Ausrichtblocks 2 festlegbar. Sie bestehen jeweils aus im Lagerbock 20 schwenkbar gelagerten Hebeln 2I bzw. 22, an deren Endbereichen Magnetanker 23 bzw. 24 befestigt sind. In deren mittlerem Bereich sind Auflageelemente 25 bzw. 26 gelenkig gelagert, so daß diese gleichmäßig mit ihrer vorzugsweise aus nicht zu hartem Kunststoff bestehenden Auflagefläche auf sämtliche LWL drücken.

Eine geringe, eine Längsverschiebung der LWL zulassende Andruckkraft ergibt sich durch das Auflagegewicht der Andrückelemente I8 und I9, welche von der für das Element I9 gezeichneten Stellung in die für das Element I8 gezeichnete Stellung schwenkbar sind.

Eine Verstärkung der Auflagekräfte ist durch Längsverschiebung von im Ausrichtblock 2 geführten Magneten 27 in Richtung auf die Magnetanker 23 bzw. 24 möglich. Der Betätigungsknopf 28 des nicht gezeichneten, dem Anker 23 zugeordneten Magneten befindet sich in der gehobenen Stellung bei starker Auflagekraft. Der Betätigungsknopf 29 des Magneten 27 dagegen ist in die untere Lage gesetzt, bei welcher sich praktisch keine zusätzliche Kraftwirkung des Magneten 27 ergibt.

Ein Hochhaltestift 30 befindet sich oberhalb des Bereichs der Führungsrinne I7. Er ist in der am Lagerbock 20 befestigten Führungshülse 3I geführt und mittels des Handknopfes 32 zurückziehbar. Seine Funktion wird später erläutert.

Der Lagerbock 20 ist über Handschrauben 33 und 34 am Ausrichtblock 2 befestigt, so daß er leicht mitsamt der daran befestigten Elemente für Reinigungszwecke abnehmbar ist. Auch der Hartmetallblock 35, in welchen die Führungsrinnen I6 und I7 eingearbeitet sind, ist nach Lösen von Klemmschrauben 36 zur Reinigung heraushebbar.

Zunächst werden die separierten LWL eines Bandkabels mit dem Bereich, der dem Kabelverbund benachbart ist, in den Kamm I4 eingefädelt. Dabei werden sie automatisch auch in die Führungsrinnen I6 gelegt. Danach wird das Ende des Bandkabels von Hand zurückgezogen, wobei sie unter dem locker aufliegenden Andrückelement I8 gleiten, bis sich die Enden der LWL im Bereich des Schlitzes 37 des Hartmetallblocks 35 befinden. Danach wird das Bandkabel auf dem Halteblock 7 mittels des Klemmhebels 9 festgeklemmt.

Anschließend werden die LWL des anderen Bandkabels in gleicher Weise in den Kamm I5 eingefädelt, wobei sie zunächst auf dem Hochhaltestift 30 aufliegen, so daß sie nicht in unkontrollierter und eine Beschädigung ermöglichender Weise in Kontakt mit den bereits eingelegten LWL des anderen Bandkabels kommen können. Danach wird das Bandkabel soweit zurückgezogen, daß die LWL der beiden Gruppen sich nicht mehr berühren können. Der Hochhaltestift 30 wird zurückgezogen und die LWL rutschen nach unten in die Führungsrinnen I7. Das Andruckelement I9 wird dann locker und der Klemmhebel I0 fest aufgelegt. Danach werden die Schlitten 5 und 6 aufeinanderzubewegt, bis sämtliche Stirnflächen der LWL der beiden Bandkabel paarweise aneinanderstoßen, wobei ein Ausgleich von Längentoleranzen der einzelnen LWL durch verschieden starke Auswölbung insbesondere im gekrümmten Bereich 38 ermöglicht wird. Schließlich werden die Betätigungsknöpfe 28 und 29 nach oben bewegt, so daß die Auflagekräfte der Andruckelemente 2I und 22 soweit vergrößert werden, daß eine Längsverschiebung der LWL in den Führungsrinnen I6 bzw. I7 nicht mehr möglich ist.

Die Erfindung wurde anhand einer für die lose Kopplung von LWL geeigneten Vorrichtung beschrieben. Es wäre jedoch leicht möglich, die dargestellte Vorrichtung mit entsprechenden Elementen weiterzubilden, welche eine nachfolgende Verschweißung der LWL-Paare ermöglichen.

**Ansprüche**

1. Vorrichtung zur paarweisen Kopplung der Enden zweier Gruppen von faserförmigen Lichtwellenleitern (LWL), welche auf je einem im wesentlichen in Längsrichtung der Lichtwellenleiter verfahrbaren Schlitten (5;6) mittels Klemmvorrichtungen (7,9;8,10) gehalten sind, so daß die Stirnflächen der Enden einer Gruppe von LWL jeweils gegen die Stirnflächen der Enden der anderen Gruppe der LWL verschiebbar sind, mit einem zwischen den Schlitten angeordneten Ausrichtblock (2), welcher für die Ausrichtung der einzelnen LWL Führungsrinnen (16;17) aufweist, in welche die in zugeordnete Auffächerungskämme (14;15) eingefädelten Enden der LWL einsortiert und durch Andruckkräfte ausübende Andrückelemente (18;19) gehalten sind,
dadurch gekennzeichnet, daß für jede Gruppe von LWL ein Andrückelement (l8;l9) vorgesehen ist, welches über ein Auflageelement (25;26) eine Gewichtskraft auf die LWL ausübt, und daß an den Andrückelementen (l8;l9) je ein Magnetanker (23;24) angeordnet ist, welche im Einflußbereich von im wesentlichen entgegen der Schwerkraftrichtung zu den Magnetankern (23;24) der aufliegenden Andrückelemente (l8;l9) hin verschiebbaren Dauermagneten (27) angeordnet sind, mit welchen die Auflagekräfte verstärkbar sind.

2. Vorrichtung nach Anspruch l,
dadurch gekennzeichnet, daß die Auflageelemente (25;26) gelenkig an Schwenkhebeln (2l;22) gelagert sind.

3. Vorrichtung nach einem der Ansprüche l oder 2,
dadurch gekennzeichnet, daß die Auffächerungskämme (l4;l5) den Führungsrinnen (l6;l7) zugeordnete Bestandteile des Ausrichtblocks (2) und unmittelbar vor den Führungsrinnen (l6;l7) angeordnet sind.

4. Vorrichtung nach einem der Ansprüche l bis 3,
dadurch gekennzeichnet, daß zwischen einem der Auffächerungskämme (l5) und der Verbindungsstelle der Gruppen der LWL (Schlitz 37) oberhalb der Führungsrinnen (l7) ein aus dem Bereich der LWL entfernbares Hochhalteelement (30) angeordnet ist.

**Claims**

1. A device for pair-wise coupling the ends of two groups of optical fibres (LWL) which are retained by means of clamping devices (7,9; 8,10) on respective slides (5;6) which are displaceable essentially in the longitudinal direction of the optical fibres, so that the end faces of one group of optical fibres can be positioned against the end faces of the other group of optical fibres, which device comprises an alignment block (2) which is arranged between the slides and which comprises guide grooves (16;17) for the alignment of the individual optical fibres in which the ends of the optical fibres, inserted in associated fan-out combs (14;15), are arranged and retained by pressure members (18;19), characterized in that for each group of optical fibres there is provided a pressure member (18;19) which exerts a weight-dependent pressure on the optical fibres via a contact member 25;26), on each pressure member (18;19) there being provided a magnetic armature (23;24); which magnetic armatures are situated within the range of influence of permanent magnets (27) which are displaceable essentially against the force of gravity, towards the magnetic armatures (23;24) of the pressure members (18;19), and by means of which the weight-dependent pressures can be increased.

2. A device as claimed in Claim 1, characterized in that the contact members (25;26) are pivotably connected to pivot levers (21;22).

3. A device as claimed in Claim 1 or 2, characterized in that the fan-out combs 14;15) are parts of the alignment block (2) which are associated with the guide grooves (16;17), said fan-out combs being arranged directly in front of the guide grooves (16;17).

4. A device as claimed in any one of the Claims 1 to 3, characterized in that between one of the fan-out combs (15) and the area of connection of the groups of optical fibres (slit 37) and over the guide grooves (17) there is arranged a hold-up member (30) which can be retracted from the area of the optical fibres.

**Revendications**

1. Dispositif pour l'accouplement par paires des extrémités de deux groupes de guides d'ondes lumineuses en forme de fibre qui sont maintenues à l'aide de dispositifs de serrage (7,9;8,10) sur chaque fois un chariot (5;6) pouvant être déplacé essentiellement dans la direction longitudinale des guides d'ondes lumineuses de façon que les surfaces extérieures des extrémités d'un groupe de guides d'ondes lumineuses puissent être déplacées chaque fois contre les surfaces extérieures des extrémités de l'autre groupe de guides d'ondes lumineuses à l'aide d'un bloc d'alignement (2) disposé entre les chariots et présentant des fentes de guidage (16; 17) pour les guides d'ondes lumineuses séparés, dans lesquelles sont triées les extrémités des guides d'ondes lumineuses enfilées dans des peignes d'étendage (14;15) correspondants et maintenues par des éléments de pression (18;19) exerçant des forces de pression, caractérisé en ce que pour chaque groupe de guides d'ondes lumineuses est prévu un élément de pression (18;19) exerçant une force de poids sur les guides d'ondes lumineuses par l'intermédiaire d'un élément d'appui (25;26) et qu'à l'élément de pression (18;19) est disposée une armature d'aimant (23;24) qui se trouve dans le domaine d'influence d'un aimant (27) permanent pouvant être déplacé essentiellement à l'encontre de la pesanteur vers l'armature d'aimant (23;24) de l'élément de pression (18;19) superposé et permettant d'augmenter la force de pression.

2. Dispositif selon la revendication 1, caractérisé en ce que les éléments d'appui (25, 26) sont reliés de façon articulée aux leviers pivotants (21;22).

3. Dispositif selon l'une des revendications 1 ou 2, caractérisé en ce que des composants du bloc d'alignement (2) appartenant aux fentes de guidage (16; 17) sont disposés aux peignes d'étendage (14; 15) et immédiatement devant les fentes de guidage (16; 17).

4. Dispositif selon l'une des revendications 1 à 3, caractérisé en ce qu'un élément de support (30) pouvant être éloigné du domaine des guides d'ondes lumineuses est disposé entre l'un des peignes d'étendage (15) et l'endroit de liaison des groupes de guides d'ondes lumineuses au-dessus des fentes de guidage (17).

FIG.1

FIG.2

EP 0 244 004 B1